# EUROPÄISCHE PATENTANMELDUNG

(11) **EP 3 670 175 A1**
(43) Veröffentlichungstag der Anmeldung: **24.06.2020**
(21) Anmeldenummer: 18213343.9
(22) Anmeldetag: 18.12.2018
(51) Int. Cl.: B32B 7/12, B32B 15/04, B32B 15/18, B32B 15/08, B32B 15/09, B32B 15/14, B32B 3/08, B32B 3/26, G06K 19/07

(54) **SUBSTRAT UND VERFAHREN ZUM HERSTELLEN EINES SUBSTRATS**

(71) Anmelder: Heraeus Deutschland GmbH & Co KG, 63450 Hanau (DE)
(72) Erfinder: Ditzel, Eckhard, 63589 Linsengericht (DE); Benedikt, Michael, 63543 Neuberg (DE); Krüger, Dr., Frank, 61130 Nidderau (DE)
(74) Vertreter: Kilchert, Jochen

(57) **Zusammenfassung**

Die Erfindung betrifft ein Substrat (10), insbesondere ein Chipkartensubstrat, umfassend mindestens eine erste Schicht (20), die mindestens ein erstes Metallmaterial und mindestens eine erste Beschichtung (21) aufweist, und mindestens eine zweite Schicht (30), die mindestens ein zweites Metallmaterial oder ein Kunststoffmaterial und mindestens eine zweite Beschichtung (31) aufweist. Erfindungsgemäß sind die mindestens zwei Schichten (20, 30) mittels eines druckaktivierbaren Klebstoffs (40) miteinander verbunden, wobei der druckaktivierbare Klebstoff (40) zumindest abschnittsweise zwischen den beiden Schichten (20, 30) ausgebildet ist.

## Beschreibung

Die Erfindung betrifft ein Substrat, insbesondere Chipkartensubstrat, umfassend mindestens eine erste Schicht und mindestens eine zweite Schicht. Des Weiteren bezieht sich die Erfindung auf ein Verfahren zur Herstellung eines Substrats, insbesondere eines Chipkartensubstrats, besonders bevorzugt zur Herstellung eines erfindungsgemäßen Substrats.

Im Bereich der Halbleitertechnik ist es bekannt, verschiedene Metallschichten galvanisch zu beschichten. Mehrere zusammengefügte Metallschichten ergeben dabei Substrate. Bei bislang bekannten Verfahren zur Herstellung derartiger Substrate werden Laminiervorgänge unter Wärmebeaufschlagung durchgeführt.

Aufgrund dieser bislang bekannten Verfahren werden die Metallschichten, insbesondere die Beschichtungen, nachteilig beeinflusst. Die geforderte Bondbarkeit und ein vorzugsweise geringer Kontaktwiderstand sind bei den hergestellten Substraten oftmals nicht mehr sicher gegeben. Die Gründe hierfür liegen beispielsweise in der Oxidation von Metalloberflächen während des Herstellungsverfahrens. Außerdem können bislang bekannte Verbindungsmaterialien ausgasen.

Des Weiteren ist seit geraumer Zeit der Wunsch nach Substraten aus Edelstahl-Materialien gestiegen. Bei derartigen Substraten aus Edelstahl-Schichten eignen sich bislang bekannte Prozessfolgen nicht, insbesondere sofern diese Edelstahl-Schichten eine funktionale galvanische Beschichtung aufweisen. Auch nach der Verbindung von einzelnen Schichten muss die Beschichtung bondbar sein und/oder einen homogenen Kontaktwiderstand aufweisen.

Der Erfindung liegt damit die Aufgabe zu Grunde, ein weiterentwickeltes Substrat zur Verfügung zu stellen, das auch nach etwaigen Herstellungsschritten bondbar ist und/oder einen homogenen geringen Kontaktwiderstand aufweist. Das Substrat soll außerdem eine hohe Langzeitstabilität aufweisen.

Des Weiteren ist es Aufgabe der vorliegenden Erfindung, ein weiterentwickeltes Verfahren zur Herstellung eines Substrates, insbesondere eines Chipkartensubstrates, zur Verfügung zu stellen. Auf Grundlage des erfindungsgemäßen Verfahrens sollen Substrate herstellbar sein, die gut bondbar sind und/oder einen geringen Kontaktwiderstand aufweisen.

Erfindungsgemäß wird diese Aufgabe im Hinblick auf das Substrat, insbesondere im Hinblick auf ein Chipkartensubstrat, durch die Merkmale des Anspruchs 1 gelöst.

Im Hinblick auf das Verfahren zur Herstellung eines Substrates, insbesondere eines Chipkartensubstrates, wird die Aufgabe durch die Merkmale des Anspruches 11 gelöst.

Die Erfindung beruht auf dem Gedanken, ein Substrat, insbesondere ein Chipkartensubstrat, anzugeben, das mindestens eine erste Schicht und mindestens eine zweite Schicht umfasst. Die erste Schicht weist mindestens ein erstes Metallmaterial und mindestens eine Beschichtung auf. Die zweite Schicht weist mindestens ein zweites Metallmaterial oder ein Kunststoffmaterial und mindestens eine zweite Beschichtung auf.

Erfindungsgemäß sind die mindestens zwei Schichten mittels eines druckaktivierbaren Klebstoffs miteinander verbunden, wobei der druckaktivierbare Klebstoff zumindest abschnittsweise zwischen den beiden Schichten ausgebildet ist.

Aufgrund der Verwendung eines druckaktivierbaren Klebstoffes ist bei der Herstellung des Substrates keine thermische Aushärtung mehr erforderlich. Damit werden Beschichtungen und/oder die Materialien der mindestens zwei Schichten nicht mehr geschädigt und/oder kontaminiert.

Der druckaktivierbare Klebstoff kann auch als PSA-Kleber (pressure sensitive adhesive) bezeichnet werden.

Der druckaktivierbare Klebstoff ist zumindest abschnittsweise zwischen den beiden Schichten ausgebildet. In einer Ausführungsform der Erfindung ist es möglich, dass der druckaktivierbare Klebstoff vollflächig zwischen den mindestens zwei Schichten ausgebildet ist. Sofern mehrere Schichten miteinander zu einem Substrat verbunden werden sollen, ist es möglich, dass zwischen den jeweils einzelnen Schichten jeweils ein druckaktivierbarer Klebstoff ausgebildet ist, um die einzelnen Schichten miteinander zu verbinden.

Die erste Schicht und/oder die zweite Schicht kann eine Folie und/oder ein Band sein.

Als Schicht kann folglich eine Folie und/oder ein Band mit darauf aufgebrachtem Beschichtungsmaterial bezeichnet werden. Bei der ersten Schicht und/oder der zweiten Schicht kann es sich auch um einen Folienabschnitt und/oder einen Bandabschnitt handeln.

Das Kunststoffmaterial der zweiten Schicht kann Polyimid (PI) und/oder Polyester (PET) und/oder Polyethylennaphthalat (PEN) und/oder Glas-Epoxy sein. Insbesondere ist es möglich, dass das Kunststoffmaterial ein Verbundwerkstoffmaterial, insbesondere ein FR4-Verbundwerkstoffmaterial, ist. Das Kunststoffmaterial kann ein glasfaserverstärkter Kunststoff sein.

Kunststoffmaterialien im Zusammenhang mit einer mindestens zweiten Schicht des Substrates werden insbesondere eingesetzt, sofern die mindestens erste Schicht aus einem Metall, insbesondere aus Edelstahl, gebildet ist.

Das erste Metallmaterial und/oder das zweite Metallmaterial kann ein Edelstahlmaterial umfassen. Die erste Beschichtung und/oder die zweite Beschichtung kann Nickel und/oder Silber und/oder Gold und/oder Palladium und/oder Platin und/oder Rhodium und/oder eine Nickel-Palladium-Gold-Legierung (NiPdAu) und/oder eine Nickel-Palladium-Legierung (NiPd) umfassen. Es ist möglich, dass die erste Beschichtung und/oder die zweite Beschichtung Legierungen aus den genannten Materialien umfasst.

Außerdem kann die erste Beschichtung und/oder die zweite Beschichtung Additive aufweisen. Ferner ist es möglich, dass die erste Beschichtung und/oder die zweite Beschichtung Nickel und eine Nickel-Palladium-Legierung und Gold umfasst. Es ist möglich, dass die erste Beschichtung und/oder die zweite Beschichtung Legierungen aus den genannten Elementen umfasst.

Die erste Beschichtung und die zweite Beschichtung können aus dem gleichen Material gebildet sein. Auch bei einer Kombination von Schichten, wobei eine erste Schicht aus Metallmaterial und eine zweite Schicht aus Kunststoffmaterial besteht, ist es möglich, dass sowohl die erste Beschichtung als auch die zweite Beschichtung aus dem gleichen Material gebildet sind, oder das gleiche Material umfassen.

Vorzugsweise sind die Materialien der ersten Beschichtung sowie der mindestens zweiten Beschichtung unterschiedlich ausgebildet. Insbesondere sind die Beschichtungen derart ausgewählt, dass sie der bevorzugten späteren Kontaktierung dienen.

Die erste Beschichtung wird vorzugsweise von einem ersten Kontaktelement, insbesondere einem Bonddraht, kontaktiert oder ist von einem ersten Kontaktelement, insbesondere einem Bonddraht, kontaktierbar.

Die zweite Beschichtung ist vorzugsweise von einem zweiten Kontaktelement, insbesondere einem Anschluss einer Antenne, kontaktiert oder ist von einem zweiten Kontaktelement, insbesondere einem Anschluss einer Antenne, kontaktierbar.

Mit anderen Worten ist die Beschichtung, nämlich die erste Beschichtung, der ersten Schicht derart angepasst oder ausgewählt, dass diese zumindest bereichsweise von einem ersten Kontaktelement kontaktiert werden kann. Die Beschichtung der zweiten Schicht, nämlich die zweite Beschichtung, ist vorzugsweise derart ausgewählt oder angepasst, dass diese zumindest bereichsweise von einem zweiten Kontaktelement kontaktiert werden kann.

Der druckaktivierbare Klebstoff verbindet sich unter Einwirkung eines beaufschlagten Druckes mit den beiden Schichten oder ist unter Einwirkung eines beaufschlagten Drucks mit den beiden Schichten verbindbar. Insbesondere findet die Beaufschlagung mit einem Druck bei einer im Wesentlichen unveränderten Umgebungstemperatur statt. Der zu beaufschlagende Druck ist dabei relativ niedrig. Der zu beaufschlagende Druck bei einem Laminiervorgang reicht bereits zum Aktivieren des Klebstoffes aus.

Es ist möglich, dass der druckaktivierbare Klebstoff, eine Isolationsschicht, insbesondere zwischen den beiden zu verbindenden Schichten, bildet. Mit anderen Worten kann der druckaktivierbare Klebstoff derart angepasst sein, dass die beiden zu verbindenden Schichten gegeneinander isoliert sind.

Der druckaktivierbare Klebstoff ist vorzugsweise derart ausgewählt oder ausgebildet, dass dieser sowohl während des Herstellungsverfahrens, d.h. während dem Verbinden der beiden Schichten, als auch beim hergestellten und verwendeten Substrat nicht ausgast. Die Oberflächenstrukturen der zu verbindenden Schichten sollen im Wesentlichen nicht aufgrund des druckaktivierbaren Klebstoffs verändert werden.

Der druckaktivierbare Klebstoff kann insbesondere ein Acryl-Klebstoff und/oder ein Kautschuk-Klebstoff und/oder ein Polysiloxan-Klebstoff (Silikon-Klebstoff) und/oder ein Phenol und/oder ein Epoxid und/oder ein Polyurethan und/oder ein Acrylat-Klebstoff sein. Der druckaktivierbare Klebstoff kann auch aus verschiedenen, insbesondere aus mehreren der genannten, Klebstoffe gebildet sein. Außerdem kann der druckaktivierbare Klebstoff im Ausgangszustand Lösemittel aufweisen. Vorzugsweise ist der druckaktivierbare Klebstoff eine Mischung aus Acrylat-Klebstoff und Kautschuk-Klebstoff. Eine derartige Mischung bildet eine besonders feste Verbindung.

Insbesondere ist der druckaktivierbare Klebstoff vor dem Herstellungsverfahren auf einem Träger, insbesondere auf einer PET-Folie, ausgebildet und befindet sich vorzugsweise auf beiden Seiten eines Trägers. Die Verbindung von mindestens zwei Schichten aufgrund des druckaktivierbaren Klebstoffes wird bei einem Laminiervorgang, d.h. insbesondere bei einem Roll-Laminieren, hergestellt.

In einer besonders bevorzugten Ausführungsform der Erfindung kann das Substrat als dreischichtiges, insbesondere als mindestens dreischichtiges, Dual-Interface-Smartcard-Substrat ausgebildet sein. Ein derartiges Chipkartensubstrat weist vorzugsweise mindestens eine Schicht, d.h. mindestens eine Metallschicht, aus Edelstahl auf.

Mindestens eine Schicht, insbesondere die erste Schicht, weist mindestens eine Durchgangsöffnung auf, die zumindest ein Leadframe für eine Smartcard bildet. In einer besonders bevorzugten Ausführungsform der Erfindung weist die erste Schicht des Substrates eine Vielzahl von Durchgangsöffnungen auf, so dass eine Vielzahl von Leadframes für eine Vielzahl von Smartcards gebildet werden können.

Die vorliegende Erfindung basiert gemäß eines weiteren, insbesondere nebengeordneten, Aspekts auf einem Verfahren zur Herstellung eines Substrats, insbesondere eines Chipkartensubstrats. In einer besonders bevorzugten Ausführungsform der Erfindung dient das erfindungsgemäße Verfahren zur Herstellung eines erfindungsgemäßen Substrats.

Das erfindungsgemäße Verfahren umfasst die Schritte:
a) Bereitstellen einer ersten Schicht, die mindestens ein erstes Metallmaterial und mindestens eine erste Beschichtung aufweist;
b) Bereitstellen mindestens einer zweiten Schicht, die mindestens ein zweites Metallmaterial oder ein Kunststoffmaterial umfasst und mindestens eine zweite Beschichtung aufweist;
c) Strukturieren der ersten Schicht;
d) Verbinden der ersten Schicht mit der mindestens zweiten Schicht mittels eines Klebstoffes, insbesondere durch ein Laminierverfahren.

Das erfindungsgemäße Verfahren basiert demnach auf dem Grundgedanken, die mindestens zwei Schichten bereits im beschichteten Zustand zur Verfügung zu stellen. Mit anderen Worten werden die Schritte a) und b) tatsächlich vor dem Schritt c) durchgeführt. Der Schritt c), nämlich das Strukturieren der ersten Schicht erfolgt somit im Zusammenhang mit einer bereits beschichteten ersten Schicht. Das Verfahren eignet sich besonders bei der Verwendung einer ersten Schicht aus einem Stahlmaterial, insbesondere einem Edelstahlmaterial.

Die Prozessabfolge wird somit im Zusammenhang mit bereits bekannten Verfahren zur Herstellung eines Substrates geändert. Aufgrund des Verbindens der ersten Schicht mit der mindestens zweiten Schicht mittels eines Klebstoffes, insbesondere durch ein Laminierverfahren, ist die erste Beschichtung und/oder die zweite Beschichtung auch nach dem Verbinden uneingeschränkt nutzbar, insbesondere uneingeschränkt bondbar.

Der Klebstoff kann insbesondere ein Epoxidkleber und/oder ein druckaktivierbarer Klebstoff, insbesondere ein Acryl-Klebstoff und/oder ein Kautschuk-Klebstoff und/oder ein Polysiloxan-Klebstoff (Silikon-Klebstoff) und/oder ein Phenol und/oder ein Polyurethan und/oder ein Acrylat-Klebstoff sein.

Der Schritt c), nämlich das Strukturieren der ersten Schicht, wird insbesondere mittels eines Stanzverfahrens, insbesondere mittels eines Rollstanzverfahrens, durchgeführt. Vorzugsweise wird im Schritt c) mindestens eine Durchgangsöffnung in die erste Schicht eingebracht. Es ist möglich, dass der Schritt c) mittels eines Laserschneidverfahrens durchgeführt wird.

In einer besonders bevorzugten Ausführungsform der Erfindung wird beim Strukturieren der ersten Schicht, insbesondere beim Stanzen der ersten Schicht, besonders bevorzugt beim Rollstanzen, eine Vielzahl von Durchgangsöffnungen in die erste Schicht eingebracht, so dass eine Vielzahl von Leadframes für eine Vielzahl von Smartcards gebildet wird. Sofern lediglich eine Durchgangsöffnung in die erste Schicht eingebracht wird, wird beispielsweise lediglich ein Leadframe für eine Smartcard gebildet.

Bei den Materialien der ersten Schicht und/oder der zweiten Schicht kann es sich insbesondere um die Materialien handeln, die bereits im Zusammenhang mit dem erfindungsgemäßen Substrat genannt sind.

Die erste Beschichtung der ersten Schicht und/oder die zweite Beschichtung der zweiten Schicht wird vorzugsweise mittels Galvanisierung erzeugt.

Bei dem Material der ersten Schicht handelt es sich folglich um das Metallmaterial, das bereits im Zusammenhang mit dem erfindungsgemäßen Substrat genannt wurde. Bei dem Material der zweiten Schicht handelt es sich vorzugsweise um ein Metallmaterial oder um ein Kunststoffmaterial, wie dieses bereits im Zusammenhang mit dem erfindungsgemäßen Substrat genannt wurde.

Des Weiteren ist es möglich, dass im Schritt a) oder im Schritt b) eine beschichtete Metallfolie und/oder ein beschichtetes Metallband bereitgestellt wird/werden.

Zusammenfassend ermöglicht das erfindungsgemäße Verfahren die Herstellung eines eingangs genannten erfindungsgemäßen Substrates. Des Weiteren ist es aufgrund des erfindungsgemäßen Verfahrens möglich, insbesondere Substrate, die Metallschichten, insbesondere Edelstahl-Schichten, aufweisen derart herzustellen, dass diese auch nach dem Verbindungsvorgang uneingeschränkt nutzbar, insbesondere uneingeschränkt bondbar, sind.

Insbesondere bei Verwendung eines Edelstahlmaterials für mindestens eine von zwei Schichten ist es möglich, druckaktivierbare Klebstoffe zur Verbindung der Schichten zu verwenden, da trotz Verwendung eines im Vergleich zu bekannten Klebstoffen weicheren Klebstoffes das Stahlmaterial, insbesondere das Edelstahlmaterial, die Steifigkeit des Substrates positiv beeinflusst. Die Beschichtungen sind aufgrund der Verwendung eines Klebstoffes, insbesondere eines druckaktivierbaren Klebstoffes, auch nach dem Verbindungsvorgang uneingeschränkt nutzbar. Dies betrifft insbesondere bevorzugt verwendete Silber-Beschichtungen.

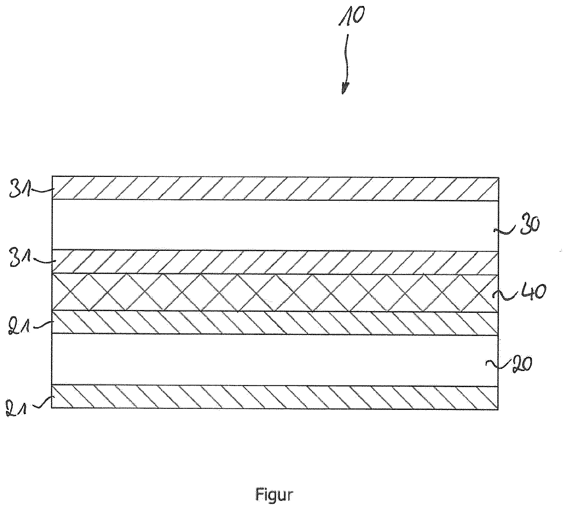

Nachfolgend wird die Erfindung anhand eines Ausführungsbeispiels unter Bezug auf die beigefügte Figur näher erläutert.

Die Figur zeigt dabei ein Substrat 10. Dieses Substrat 10 umfasst im Wesentlichen zwei Schichten, nämlich eine erste Schicht 20, die aus einem ersten Metallmaterial besteht (oder ein erstes Metallmaterial aufweist) und einer zweiten Schicht 30, die beispielsweise aus einem Kunststoffmaterial besteht (oder ein Kunststoffmaterial aufweist). Die erste Schicht 20 besteht insbesondere aus einem Edelstahlmaterial und weist eine erste Beschichtung 21 auf. Es wird klar, dass beide Seiten der ersten Schicht 20 mit der ersten Beschichtung 21 ausgebildet sind. Bei der ersten Beschichtung handelt es sich insbesondere um eine Silberbeschichtung.

Auch die zweite Schicht 30 weist eine Beschichtung, nämlich eine zweite Beschichtung 31, auf. Auch die zweite Schicht 30, die aus einem Kunststoffmaterial besteht, ist beidseits mit der zweiten Beschichtung 31 ausgebildet.

Die beiden Schichten 20 und 30 sind mittels eines druckaktivierbaren Klebstoffs 40 miteinander verbunden. Der druckaktivierbare Klebstoff 40 wird beispielsweise in Form einer Folie zwischen die beiden Schichten 20 und 30, insbesondere zwischen eine obere erste Beschichtung 21 und eine untere zweite Beschichtung 31, gelegt.

Mittels eines Laminiervorganges wird das Klebstoffmaterial 40, das auf einer Trägerfolie befindlich ist, aktiviert, so dass eine Verbindung zwischen der ersten Schicht 20 und der zweiten Schicht 30 gebildet wird. Bei dem druckaktivierbaren Klebstoff 40 kann es sich um einen Acrylat-Klebstoff oder einen Kautschuk-Klebstoff und/oder einen Polysiloxan-Klebstoff und/oder einen Acryl-Klebstoff handeln. Auch die Verwendung eines Phenols und/oder eines Epoxids und/oder eines Polyurethans ist möglich. Die erste Beschichtung 21 ist vorzugsweise aus derartigem Material gebildet, so dass dieses besonders gut zur Kontaktierung mit einem Bonddraht dient.

Die zweite Beschichtung 31 ist hingegen derart ausgebildet, dass die zweite Beschichtung 31 von einem zweiten Kontaktelement, insbesondere einem Anschluss einer Antenne, kontaktiert oder kontaktierbar ist.

### Bezugszeichenliste

- 10: Substrat
- 20: Erste Schicht
- 21: Erste Beschichtung
- 30: Zweite Schicht
- 31: Zweite Beschichtung
- 40: Druckaktivierbarer Klebstoff

## Patentansprüche

1. Substrat (10), insbesondere Chipkartensubstrat, umfassend mindestens eine erste Schicht (20), die mindestens ein erstes Metallmaterial und mindestens eine erste Beschichtung (21) aufweist, und mindestens eine zweite Schicht (30), die mindestens ein zweites Metallmaterial oder ein Kunststoffmaterial und mindestens eine zweite Beschichtung (31) aufweist,
**dadurch gekennzeichnet, dass**
die mindestens zwei Schichten (20, 30) mittels eines druckaktivierbaren Klebstoffs (40) miteinander verbunden sind, wobei der druckaktivierbare Klebstoff (40) zumindest abschnittsweise zwischen den beiden Schichten (20, 30) ausgebildet ist.

2. Substrat (10) nach Anspruch 1,
**dadurch gekennzeichnet, dass**
die erste Schicht (20) und/oder die zweite Schicht (30) eine Folie und/oder ein Band ist.

3. Substrat (10) nach Anspruch 1 oder 2,
**dadurch gekennzeichnet, dass**
das Kunststoffmaterial der zweiten Schicht (30) Polyimid (PI) und/oder Polyester (PET) und/oder Polyethylennaphthalat (PEN) und/oder Glas-Epoxy ist.

4. Substrat (10) nach einem der Ansprüche 1 bis 3,
**dadurch gekennzeichnet, dass**
das erste Metallmaterial und/oder das zweite Metallmaterial ein Edelstahlmaterial umfasst/umfassen.

5. Substrat (10) nach einem der vorangegangenen Ansprüche,
**dadurch gekennzeichnet, dass**
die erste Beschichtung (21) und/oder die zweite Beschichtung (31) Nickel und/oder Platin und/oder Rhodium und/oder Silber und/oder Gold und/oder Palladium und/oder eine Nickel-Palladium-Gold-Legierung (NiPdAU) und/oder eine Nickel-Palladium-Legierung (NiPd) und/oder eine Legierung der genannten Elemente umfasst/umfassen.

6. Substrat (10) nach einem der vorangegangenen Ansprüche,
**dadurch gekennzeichnet, dass**
die erste Beschichtung (21) von einem ersten Kontaktelement, insbesondere einem Bonddraht, kontaktiert oder kontaktierbar ist, und/oder
die zweite Beschichtung (31) von einem zweiten Kontaktelement, insbesondere einem Anschluss einer Antenne, kontaktiert oder kontaktierbar ist.

7. Substrat (10) nach einem der vorangegangenen Ansprüche,
**dadurch gekennzeichnet, dass**
der druckaktivierbare Klebstoff (40) sich unter Einwirkung eines beaufschlagten Drucks, insbesondere bei einer im Wesentlichen unveränderten Umgebungstemperatur, mit den beiden Schichten verbindet oder verbindbar ist,
und/oder
der druckaktivierbare Klebstoff (40) eine Isolationsschicht bildet.

8. Substrat (10) nach einem der vorangegangenen Ansprüche,
**dadurch gekennzeichnet, dass**
der druckaktivierbare Klebstoff (40) ein Acrylat-Klebstoff und/oder ein Kautschuk-Klebstoff und/oder ein Polysiloxan-Klebstoff und/oder ein Phenol und/oder ein Epoxid und/oder ein Polyurethan und/oder ein Acryl-Klebstoff ist.

9. Substrat (10) nach einem der vorangegangenen Ansprüche,
**gekennzeichnet durch**
die Ausbildung als dreischichtiges Dual Interface Smart Card Substrat.

10. Substrat (10) nach einem der vorangegangenen Ansprüche,
**dadurch gekennzeichnet, dass**
mindestens eine Schicht (20, 30), insbesondere die erste Schicht (20), mindestens eine Durchgangsöffnung aufweist, die zumindest einen Leadframe für eine Smart Card bildet.

11. Verfahren zur Herstellung eines Substrats (10), insbesondere eines Chipkartensubstrat, besonderes bevorzugt nach einem der Ansprüche 1 bis 10, umfassend die Schritte:
a) Bereitstellen einer ersten Schicht (20), die mindestens ein erstes Metallmaterial und mindestens eine erste Beschichtung (21) aufweist;
b) Bereitstellen mindestens einer zweiten Schicht (30), die mindestens ein zweites Metallmaterial oder ein Kunststoffmaterial umfasst und mindestens eine zweite Beschichtung (31) aufweist;
c) Strukturieren der ersten Schicht (20);
d) Verbinden der ersten Schicht (20) mit der mindestens zweiten Schicht (30) mittels eines Klebstoffes, insbesondere durch ein Laminierverfahren.

12. Verfahren nach Anspruch 11,
**dadurch gekennzeichnet, dass**
der Klebstoff ein Epoxidkleber und/oder ein druckaktivierbarer Klebstoff (40), insbesondere ein Acrylat-Klebstoff und/oder ein Kautschuk-Klebstoff und/oder ein Polysiloxan-Klebstoff und/oder ein Phenol und/oder ein Polyurethan und/oder ein Acryl-Klebstoff, ist.

13. Verfahren nach Anspruch 11 oder 12,
**dadurch gekennzeichnet, dass**
im Schritt c) mittels eines Laserschneidverfahrens oder eines Stanzverfahrens, insbesondere mittels eines Rollstanzverfahrens, mindestens eine Durchgangsöffnung in die erste Schicht (20) eingebracht wird.

14. Verfahren nach einem der Ansprüche 11 bis 13,
**dadurch gekennzeichnet, dass**
die erste Beschichtung (21) der ersten Schicht (20) und/oder die zweite Beschichtung (31) der zweiten Schicht (30) mittels Galvanisieren erzeugt wird/werden.

15. Verfahren nach einem der Ansprüche 11 bis 14,
**dadurch gekennzeichnet, dass**
im Schritt a) und/oder im Schritt b) eine beschichtete Metallfolie und/oder ein beschichtetes Metallband bereitgestellt wird/werden.
